# FASCICULE DE BREVET EUROPEEN

(11) **EP 3 976 997 B1**
(45) Date de publication et mention de la délivrance du brevet: **09.08.2023**
(21) Numéro de dépôt: 20717899.7
(22) Date de dépôt: 16.04.2020
(51) Int. Cl.: F16H 63/34

(54) **DISPOSITIF DE BLOCAGE DE BOITE DE VITESSES**
GETRIEBEVERRIEGELUNGSVORRICHTUNG
GEARBOX LOCKING DEVICE

(30) Priorité: 28.05.2019 FR 1905632
(43) Date de publication de la demande: 06.04.2022
(73) Titulaire: Renault s.a.s, 92100 Boulogne Billancourt (FR)
(72) Inventeur: RAOUL, Michel, 78990 ELANCOURT (FR); TEIXEIRA, Jean-Michel, 91190 Gif-Sur-Yvette (FR)
(74) Mandataire: Renault Group
(86) Numéro de dépôt international: PCT/EP2020/060700
(87) Numéro de publication internationale: WO 2020/239320

(56) Documents cités:
- EP-A2- 1 035 358
- DE-A1-102005 015 161
- DE-A1-102017 114 937

## Description

L'invention concerne un dispositif de blocage d'un pignon de boîte de vitesses, pour assurer la fonction de frein de parking.

Plus précisément, elle a pour objet un dispositif de blocage de boîte de vitesses, comportant un pignon tournant fou sur un arbre de la boîte et lié manière permanente aux roues du véhicule, un crabot fixe porté par le carter, un moyeu solidaire de l'arbre, et un baladeur coulissant sur le moyeu en direction du crabot.

De nombreux véhicules équipés de boîte de vitesses automatiques ou à variation continue, de transmissions hybrides ou encore des véhicules à traction électrique, sont équipés d'un dispositif mécanique de blocage des roues, intégré à la transmission, constituant un frein de parking.

Les mécanismes de frein de parking les plus couramment utilisés, sont constitués d'une roue, dite roue de parking, solidaire en rotation d'un arbre ou du boîtier de différentiel, et d'un doigt libre en rotation autour d'un axe supporté directement ou indirectement par le carter. La roue est crantée. Le doigt porte un ergot capable de s'engager dans un des crans de la roue. Le doigt tourne sous l'action d'un mécanisme commandé manuellement par le conducteur, ou par un actionneur.

L'engagement du frein de parking est effectif, lorsque l'ergot du doigt de parking s'engage complètement dans l'un des creux de la roue. La largeur des crans étant légèrement supérieure à celle de la dent, la probabilité d'un engagement direct est très faible, de l'ordre de 5%. Pour atteindre l'engagement, le véhicule doit se déplacer d'une distance aléatoire. Lors d'un arrêt sur un sol horizontal, le véhicule reste normalement immobile lors du relâchement de la pédale de frein, de sorte que l'engagement du frein de parking est rarement effectif. En pente, la roue de parking se met en mouvement, et présente un cran au doigt de parking. La fenêtre de temps dont dispose l'extrémité du doigt pour s'engager dans un cran de la roue de parking, est cependant très étroite. En effet, la distance qu'il est autorisé à parcourir avant son immobilisation est très limitée par la règlementation, et il ne doit prendre que très peu de vitesse, car le choc de l'engagement devient vite extrêmement violent, en dépit de la robustesse des composants utilisés.

On connaît aussi des mécanismes de frein de parking de type très différent, fonctionnant grâce à l'engagement d'un crabot. La publication EP 1 035 358 décrit notamment une boîte de vitesses de type à arbres parallèles, manuelle ou robotisée, dans laquelle un groupe de synchro et crabotage, réalise par un mouvement axial à droite du baladeur l'engagement du rapport de cinquième et par le mouvement opposé le blocage en rotation de l'arbre secondaire. Le baladeur s'engage dans un crabot bloqué en rotation par rapport au carter. Le déblocage de l'arbre secondaire est réalisé par un mouvement inverse du baladeur déplacé par une fourchette commandée par le conducteur ou un actionneur. Le baladeur est monté coulissant sur un moyeu solidaire de l'arbre secondaire et présente des dents intérieures coulissant dans des rainures extérieures du moyeu et s'engageant entre des dents extérieures du crabot pour réaliser le blocage de la boîte de vitesses.

La publication DE 3 825 286 décrit un autre système de blocage, dans lequel l'arbre de sortie de la boîte de vitesses entraîne un moyeu possédant en périphérie extérieure des crans axiaux. Une roue dentée sur sa périphérie extérieure portant également des crans axiaux en vis-à-vis de ceux du moyeu, coulisse dans le carter. L'engagement des crans axiaux de la roue, dans ceux du moyeu, réalise le blocage de l'arbre, sous l'action d'un dispositif de commande manuel ou d'un actionneur. Au repos, la roue est maintenue à distance du moyeu par un ressort.

Un tel dispositif, présente comme les freins de parking classiques un nombre important de cas de blocage, car la fenêtre d'engagement des crans axiaux de la roue dentée et du moyeu est limitée.

La présente invention vise à pallier cet inconvénient des systèmes connus, en augmentant la fenêtre d'engagement du frein de parking. Dans ce but, elle propose que le baladeur présente des dents intérieures coulissant dans des rainures extérieures du moyeu, et s'engageant entre des dents extérieures du crabot, pour réaliser le blocage de la boîte de vitesses.

Le crabot est porté par un support fixé sur le carter de la boîte de vitesses, qui possède un nombre réduit de dents ou de crans répartis angulairement régulièrement.

L'espace angulaire entre les dents ou les crans, est très supérieur à l'espace angulaire occupé par une dent, à la différence des cannelures. Plus la différence entre ces deux espaces angulaires est grande, plus la probabilité d'un engagement direct est grande.

Le baladeur s'engage par un déplacement axial, pour se mettre en situation de blocage. Il possède un nombre de dents ou de crans en nombre égal ou inférieur à celui du crabot.

Le baladeur guidé sur le moyeu, a de préférence le même nombre de dents ou de crans que le baladeur.

Ce dispositif de blocage bénéficie d'une très grande fenêtre d'engagement, et permet d'atteindre un engagement direct selon une probabilité supérieure à 80%.

Grâce à l'invention, la rotation des pièces nécessaire pour parvenir à l'engagement s'il n'est pas direct, est très faible même, dans les cas les plus défavorables. Le temps disponible pour engager le frein de parking est ainsi fortement augmenté.

La présente invention sera mieux comprise à la lecture de la description suivante d'un mode de réalisation non limitatif de celle-ci, en se reportant aux dessins annexés.
[Fig. 1] est une vue en coupe longitudinale du dispositif complet, en position de non engagement.
[Fig. 2] est une vue de face du moyeu.
[Fig. 3] est une vue de face du baladeur.
[fig. 4] est une vue de face du crabot et de son support.
[Fig. 5] est une vue de face du baladeur et du moyeu assemblé.
[Fig. 6] est une vue en coupe longitudinale du dispositif en engagement incomplet.
[Fig. 7] est une vue de face du baladeur et du crabot dans la situation d'engagement incomplet.
[Fig. 8] est une vue en coupe longitudinale du dispositif en engagement réalisé.
[Fig. 9] est une vue de face du baladeur et du crabot dans la situation d'engagement réalisé.

**[Table 1]**

| Repères | Nomenclature |
|---|---|
| 1 | Dispositif de blocage dans son ensemble |
| 2 | Carter d'embrayage |
| 3 | Carter de mécanisme |
| 10 | Arbre secondaire de la boite de vitesses |
| 11 | Pignon fou d'un rapport quelconque |
| 12 | Moyeu rapporté sur le pignon 11 |
| 12,a | Rainures en périphérie extérieure du moyeu |
| 13 | Crabot fixe sur carter 3 |
| 13,a | Dents sur crabot 13 |
| 13,b | Extrémité dents 13 |
| 14 | Pion de reprise de couple de blocage |
| 15 | Vis de fixation du support crabot |
| 16 | Baladeur |
| 16,a | Dents du baladeur 16 |
| 16,b | Face baladeur |
| 20 | Fourchette de commande du baladeur |
| 21 | Axe support fourchette |
| 22 | Doigt de commande de l'axe de fourchette |
| 22,a | Rainure de blocage de la noix 32 en rotation |
| 23 | Ressort de poussée de l'axe |
| 24 | Vis de précharge |
| 30 | Actionneur électromécanique |
| 31 | Axe de poussée du doigt 22 |
| 32 | Noix d'anti rotation de l'axe 31 |

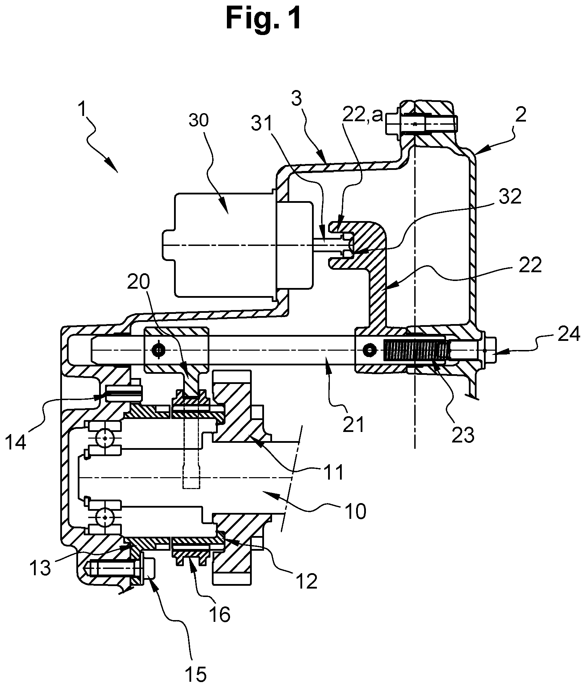

Sur la figure 1, on a représenté en coupe longitudinale, un mode de réalisation non limitatif du dispositif de blocage 1, dans une boîte de vitesses. Il comporte essentiellement un pignon 11 tournant fou sur un arbre 10 de la boîte et lié manière permanente aux roues du véhicule, un crabot fixe 13 porté par le carter de la boîte, un moyeu 12 solidaire du pignon 11, et un baladeur 16 coulissant sur le moyeu en direction du crabot.

Le dispositif de blocage 1 est agencé à l'intérieur de la boîte, qui est représentée très partiellement par le carter d'embrayage 2, le carter de mécanisme 3 et un arbre 10. Cet arbre, par exemple un arbre primaire ou un arbre de renvoi intermédiaire vers un arbre secondaire de la boîte, porte un pignon fou 11 lié au différentiel de la boîte, et par conséquent aux roues, par l'intermédiaire d'un engrenage simple ou multiple non représenté.

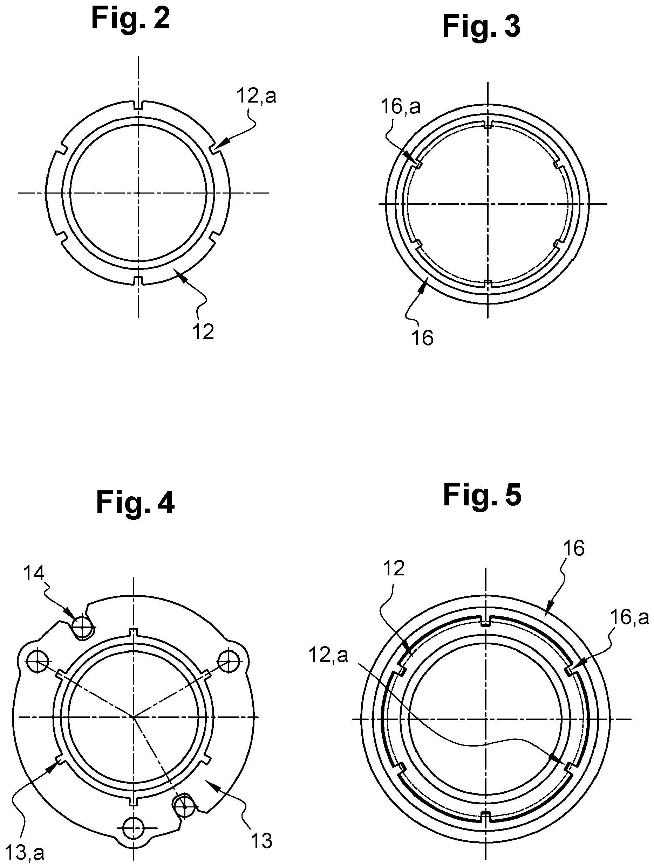

Le moyeu 12 est rapporté sur le pignon fou 11, qui présente en périphérie extérieure six rainures 12,a visibles sur la figure 2. Le moyeu 12 est fixé sur le pignon 11. Il guide en translation un baladeur 16 présentant en périphérie intérieure six dents ou cannelures 16,a, visibles sur la figure 3. Le baladeur 16 est mobile axialement sur le moyeu 12, et peut s'engager sur le crabot 13 visible sur la figure 4 . Le crabot 13 est maintenu rigidement sur le carter au moyen des vis 15, et bloqué en rotation par les pions 14 de reprise de couple. Dans l'exemple non limitatif qui est décrit, il a le même nombre de dents 13,a que le baladeur, égal à six. En résumé, le baladeur 16 présente des dents intérieures 16,a coulissant dans des rainures 12,a extérieures du moyeu 12, et s'engageant entre des dents 13,a extérieures du crabot 13, pour réaliser le blocage de la boîte de vitesses.

Sans sortir du cadre de l'invention, et dans les limites imposées par les contraintes de tenue mécanique, et par la recherche d'une forte probabilité d'engagement direct, le nombre de dents peut être inférieur ou supérieur à six. Dans tous les cas, il est préférable que le baladeur possède un nombre de dents égal ou inférieur à celui du crabot.

Le baladeur 16 est commandé par une fourchette 20 fixée sur un axe 21 qui porte un doigt de commande 22, dont l'extrémité présente une rainure 22,a, où s'engage l'extrémité de la tige de poussée 31 d'un actionneur 30. Une noix 32 de commande sertie à l'extrémité de la tige de poussée 31 (cf. figures 1, 6 et 8) de l'actionneur 30, est engagée dans la rainure 22,a. L'actionneur 30 est capable de tenir une position quelconque stable de manière permanente sans consommer d'énergie.

La noix 32 est maintenue en contact avec le doigt de commande 22 par un ressort 23 préchargé. Pour faciliter le montage, le ressort 23, peut être mis en place après fermeture de la boîte. Sa précharge peut alors être établie par serrage de la vis 24, qui est accessible à l'extérieur du carter.

Sur la figure 1, le dispositif est représenté en situation de repos, ou ouvert. Le baladeur 16 est intégralement dans l'espace axial du moyeu 12, la fourchette 20, son axe 21 et le doigt 22 sont positionnés avec précision par l'appui franc, et précis du doigt 22 sur le carter 2. La charge du ressort 24 et le maintien en position du dispositif, sont assurés grâce à l'irréversibilité de l'actionneur 30.

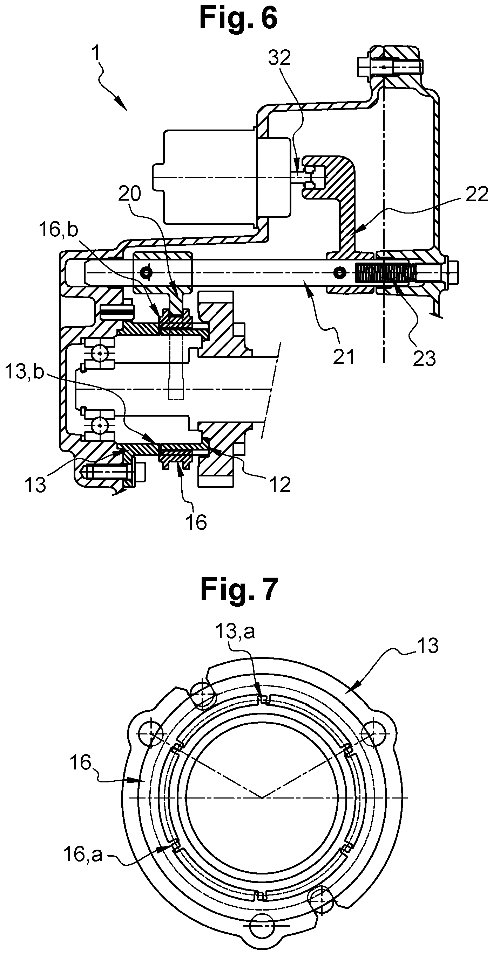

Sur la figure 6, le baladeur 16 s'est déplacé sur le moyeu 12 vers le crabot 13, mais l'engagement du dispositif n'est pas réalisé. La face 16,b, des dents 16,a du baladeur est en appui sur l'extrémité 13,b des dents 13,a du crabot 13, comme le montre la figure 7. Pour la réalisation de ce mouvement d'engagement, l'actionneur a libéré le doigt 22 de sa position forcée. La noix s'est déplacée vers la gauche, en laissant agir le ressort 23 pour pousser l'axe 21, la fourchette 20 et le baladeur 16 vers le crabot 13.

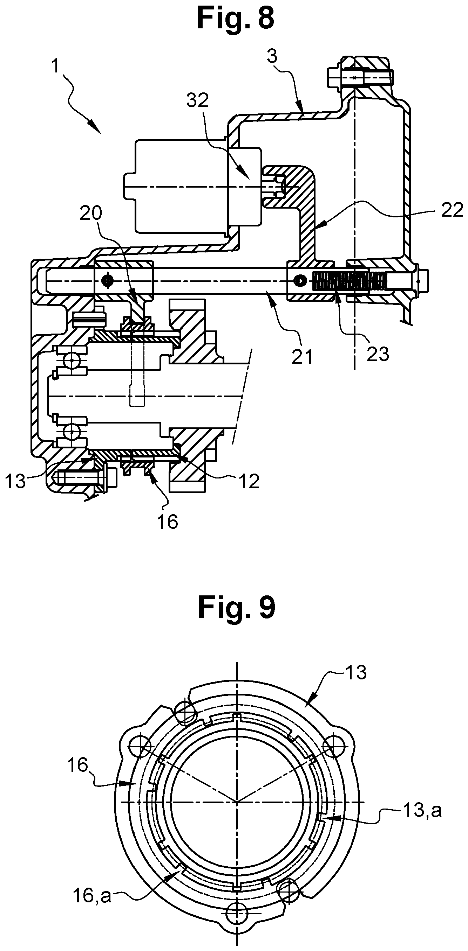

Sur la figure 8, le dispositif est représenté en situation d'engagement réalisé. Sous l'action du ressort 23, la fourchette 20 a réalisé sa course complète. Elle est en appui franc sur le carter 3. La figure 9 montre un positionnement angulaire quelconque des dents 13,a du crabot 13 par rapport aux dents 16,a du baladeur 16 : ces dernières ne rencontrent aucune opposition à la réalisation de leur course complète.

Les figures 7 et 9 montrent ensemble que les zones angulaires qui représentent d'une part les dents et d'autre part l'absence de dent permet une forte probabilité d'engagement direct, et un besoin en rotation relative petit pour passer de l'engagement échoué à réussi. De préférence, les dents 16,a du baladeur 16 et celles 13,a du crabot 13 sont sensiblement de même largeur.

L'espace angulaire entre les dents 16,a du baladeur 16 et entre celles 13,a du crabot 13 étant plusieurs fois supérieure à la largeur de ces dents, la fenêtre d'engagement est très grande en comparaison des dispositifs usuels. Dans un mode de réalisation préféré de l'invention, les dents 16a, 13a du baladeur et du crabot couvrent une portion angulaire d'environ 5° chacune autour de l'arbre 10.

La vitesse du véhicule pour laquelle l'engagement est possible est plus élevée qu'avec les freins de parkings habituels. Toutefois, l'engagement du frein de parking avant l'arrêt complet du véhicule reste préjudiciable à la conservation mécanique du dispositif. Dans ces conditions, la commande manuelle du frein de parking doit impérativement être équipée d'un système d'interdiction d'engagement pour une vitesse véhicule supérieure à un seuil déterminé, par exemple de quelques kilomètres / heure.

Le déblocage du dispositif, c'est-à-dire son retour à la situation représentée sur la figure 1, est réalisé par l'actionneur qui repousse l'ensemble doigt 22, axe 21, fourchette 20, baladeur 16 et ressort 23.

## Revendications

1. Dispositif de blocage (1) de boîte de vitesses, comportant un pignon (11) tournant fou sur un arbre (10) de la boîte et lié manière permanente aux roues du véhicule, un crabot fixe (13) porté par le carter, un moyeu(12) solidaire du pignon (11) , et un baladeur (16) coulissant sur le moyeu en direction du crabot, **caractérisé en ce que** le baladeur (16) présente des dents intérieures (16,a) coulissant dans des rainures (12,a) extérieures du moyeu (12), et s'engageant entre des dents (13,a) extérieures du crabot (13), pour réaliser le blocage de la boîte de vitesses.

2. Dispositif de blocage (1) selon la revendication 1, **caractérisé en ce que** le baladeur (16) possède un nombre de dents égal ou inférieur à celui du crabot (13).

3. Dispositif de blocage (1) selon la revendication 1, ou 2, **caractérisé en ce que** les dents (16,a) du baladeur (16) et celles (13,a) du crabot (13)sont sensiblement de même largeur.

4. Dispositif de blocage (1) selon la revendication 1, 2 ou 3, **caractérisé en ce que** l'espace angulaire entre les dents (16a) du baladeur (16) et entre celles (13,a) du crabot (13) est plusieurs fois supérieure à la largeur de ces dents.

5. Dispositif de blocage (1) selon la revendication 4, **caractérisé en ce que** les dents du baladeur et du crabot (16,a, 13,a) couvrent une portion angulaire d'environ 5° chacune autour de l'arbre (10).

6. Dispositif de blocage (1) selon la revendication 4 ou 5, **caractérisé en ce que** le baladeur (16) et le crabot (13) portent chacun six dents (16,a, 13,a).

7. Dispositif de blocage (1) selon l'une des revendications précédentes, **caractérisé en ce que** le baladeur (16) est commandé par une fourchette (20) fixée sur un axe (21) qui porte un doigt de commande 22, dont l'extrémité présente une rainure (22,a), où s'engage l'extrémité de la tige de poussée (31) d'un actionneur (30).

8. Dispositif de blocage (1) selon la revendication 7, **caractérisé en ce que** l'actionneur (30) est capable de tenir une position quelconque stable, de manière permanente, sans consommer d'énergie.

9. Dispositif de blocage (1) selon la revendication 7 ou 8, **caractérisé en ce que** l'extrémité de la tige (31) porte une noix (32), maintenue en contact avec le doigt de commande (22) par un ressort (23).

10. Dispositif de blocage (1) selon la revendication 9, **caractérisé en ce que** la précharge du ressort (23) peut être établie par serrage d'une vis (24) accessible à l'extérieur du carter.

## Patentansprüche

1. Getriebeverriegelungsvorrichtung (1), welche ein Ritzel (11), das auf einer Welle (10) des Getriebes frei dreht und mit den Rädern des Fahrzeugs dauerhaft verbunden ist, eine feststehende Klauenkupplung (13), die vom Gehäuse getragen wird, eine mit dem Ritzel (11) fest verbundene Nabe (12) und ein auf der Nabe in Richtung der Klauenkupplung gleitendes Schieberad (16) umfasst, **dadurch gekennzeichnet, dass** das Schieberad (16) Innenzähne (16,a) aufweist, die in äußeren Nuten (12,a) der Nabe (12) gleiten und zwischen äußeren Zähnen (13,a) der Klauenkupplung (13) eingreifen, um die Verriegelung des Getriebes zu bewirken.

2. Verriegelungsvorrichtung (1) nach Anspruch 1, **dadurch gekennzeichnet, dass** das Schieberad (16) eine Zähnezahl besitzt, die kleiner oder gleich derjenigen der Klauenkupplung (13) ist.

3. Verriegelungsvorrichtung (1) nach Anspruch 1 oder 2, **dadurch gekennzeichnet, dass** die Zähne (16,a) des Schieberades (16) und diejenigen (13,a) der Klauenkupplung (13) im Wesentlichen dieselbe Breite aufweisen.

4. Verriegelungsvorrichtung (1) nach Anspruch 1, 2 oder 3, **dadurch gekennzeichnet, dass** der Winkelabstand zwischen den Zähnen (16,a) des Schieberades (16) und zwischen denjenigen (13,a) der Klauenkupplung (13) um ein Vielfaches größer als die Breite dieser Zähne ist.

5. Verriegelungsvorrichtung (1) nach Anspruch 4, **dadurch gekennzeichnet, dass** sich die Zähne des Schieberades und der Klauenkupplung (16,a, 13,a) jeweils über einen Winkelbereich von ungefähr 5° um die Welle (10) erstrecken.

6. Verriegelungsvorrichtung (1) nach Anspruch 4 oder 5, **dadurch gekennzeichnet, dass** das Schieberad (16) und die Klauenkupplung (13) jeweils sechs Zähne (16,a, 13,a) tragen.

7. Verriegelungsvorrichtung (1) nach einem der vorhergehenden Ansprüche, **dadurch gekennzeichnet, dass** das Schieberad (16) von einer Schaltgabel (20) gesteuert wird, die auf einer Achse (21) befestigt ist, welche einen Schaltfinger (22) trägt, dessen Ende eine Nut (22,a) aufweist, wo das Ende der Schubstange (31) eines Stellantriebs (30) eingreift.

8. Verriegelungsvorrichtung (1) nach Anspruch 7, **dadurch gekennzeichnet, dass** der Stellantrieb (30) in der Lage ist, eine beliebige Position dauerhaft stabil zu halten, ohne Energie zu verbrauchen.

9. Verriegelungsvorrichtung (1) nach Anspruch 7 oder 8, **dadurch gekennzeichnet, dass** das Ende der Stange (31) einen Anschlag (32) trägt, der durch eine Feder (23) mit dem Schaltfinger (22) in Kontakt gehalten wird.

10. Verriegelungsvorrichtung (1) nach Anspruch 9, **dadurch gekennzeichnet, dass** die Vorspannung der Feder (23) durch Anziehen einer Schraube (24) hergestellt werden kann, die von der Außenseite des Gehäuses zugänglich ist.

## Claims

1. Gearbox locking device (1), comprising a pinion (11) rotating idly on a shaft (10) of the gearbox and permanently connected to the wheels of the vehicle, a fixed dog clutch (13) supported by the casing, a hub (12) which is securely connected to the pinion (11), and a sliding gear (16) sliding on the hub in the direction of the dog clutch, **characterized in that** the sliding gear (16) has inner teeth (16,a) sliding in outer grooves (12,a) of the hub (12) and engaging between outer teeth (13,a) of the dog clutch (13) to produce the locking of the gearbox.

2. Locking device (1) according to Claim 1, **characterized in that** the sliding gear (16) has a number of teeth which is less than or equal to that of the dog clutch (13).

3. Locking device (1) according to Claim 1 or 2, **characterized in that** the teeth (16,a) of the sliding gear (16) and those (13,a) of the dog clutch (13) have substantially the same width.

4. Locking device (1) according to Claim 1, 2 or 3, **characterized in that** the angular space between the teeth (16a) of the sliding gear (16) and between those (13,a) of the dog clutch (13) is several times greater than the width of these teeth.

5. Locking device (1) according to Claim 4, **characterized in that** the teeth of the sliding gear and of the dog clutch (16,a, 13,a) each cover an angular portion of approximately 5° around the shaft (10).

6. Locking device (1) according to Claim 4 or 5, **characterized in that** the sliding gear (16) and the dog clutch (13) each support six teeth (16,a, 13,a).

7. Locking device (1) according to any of the preceding claims, **characterized in that** the sliding gear (16) is controlled by a fork (20) which is fixed to an axle (21) which supports a control finger (22), the end of which has a groove (22,a) in which the end of the push rod (31) of an actuator (30) engages.

8. Locking device (1) according to Claim 7, **characterized in that** the actuator (30) is capable of permanently holding any stable position without consuming energy.

9. Locking device (1) according to Claim 7 or 8, **characterized in that** the end of the rod (31) supports a nut (32) which is held in contact with the control finger (22) by a spring (23).

10. Locking device (1) according to Claim 9, **characterized in that** the preloading of the spring (23) can be established by tightening a screw (24) which is accessible from outside the casing.
